# EUROPEAN PATENT SPECIFICATION

(11) **EP 1 686 648 B1**
(45) Date of publication and mention of the grant of the patent: **09.04.2008**
(21) Application number: 05250551.8
(22) Date of filing: 01.02.2005
(51) Int. Cl.: H01Q 1/24, H04B 1/38, H04M 1/02

(54) **Mobile wireless communications device comprising integrated antenna and keyboard and related methods**
Tragbares Mobilfunkgerät mit integrierter Antenna und Tastatur und dazugehörige Verfahren
Dispositif de communication mobil sans fil avec antenne et clavier integré et procédés associés

(43) Date of publication of application: 02.08.2006
(73) Proprietor: Research In Motion Limited, Waterloo, Ontario N2L 3W8 (CA)
(72) Inventor: Phillips, Robert, Waterloo Ontario N2L 6M8 (CA); Yule, Robert Campbell, Cambridge Ontario N1R 6L9 (CA)
(74) Representative: Roberts, Gwilym Vaughan

(56) References cited:
- WO-A-00/30268
- WO-A-01/24310
- WO-A-94/19873
- WO-A-99/63616
- US-A1- 2004 108 959

## Description

### Field of the Invention

The present invention relates to the field of communications devices, and more particularly, to mobile wireless communications devices and related methods.

### Background of the Invention

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. As a result, one style of cellular telephones which has gained wide popularity is the folding or "flip" phone. Flip phones typically have an upper housing with a display and speaker, and a lower housing or flap which carries the microphone. The keypad on such phones may be on either the upper housing or the lower housing, depending upon the particular model. The lower flap is connected to the upper housing by a hinge so that when not in use the upper and lower housings can be folded together to be more compact.

One example of a flip phone is disclosed in U.S. Patent No. 5,337,061 to Pye et al. The phone has two antennas, a first one of which is mounted on the lower flap and includes a ground plane and an active monopole fed by a coaxial feed from electronic circuitry inside the phone. The flap is pivotally connected to the main or upper section of the housing, and is folded against the main section when not in use. Another similar antenna is fitted in the main section, and both antennas are connected to transceiver circuitry in the phone. The antennas are designed to introduce deliberate mismatch to provide an effective switching system between the antennas without the need for separate circuit elements.

The antenna configuration of a cellular telephone may also significantly effect the overall size or footprint of the phone. Cellular telephones typically have antenna structures that support communications in multiple operating frequency bands. Various types of antennas for mobile devices are used, such as helix, "inverted F", folded dipole, and retractable antenna structures, for example. Helix and retractable antennas are typically deployed outside, i.e., on the exterior of, a mobile device, and inverted F and folded dipole antennas are typically within (i.e., on the interior of) a mobile device case or housing adjacent the top thereof.

Generally speaking, internal antennas allow cell phones to have a smaller footprint than do external antennas. Moreover, they are also are preferred over external antennas for mechanical and ergonomic reasons. Internal antennas are also protected by the mobile device housing and therefore tend to be more durable than external antennas, which may be cumbersome and make the mobile device difficult to use, particularly in limited-space environments.

Yet, one potential drawback of typical internal cellular phone antennas is that they are in relatively close proximity to the user's head when the phone is in use. As an antenna moves closer to a user's body, the amount of radio frequency (RF) energy radiation absorbed by the body will typically increase. The amount of RF energy absorbed by a body when using a mobile phone is called the specific absorption rate (SAR), and the allowable SAR for mobile phones is typically limited by applicable government regulations to ensure safe user RF energy exposure levels.

One attempt to reduce radiation exposure from cell phone antennas is set forth in U.S. Patent No. 6,741,215 to Grant et al. This patent discloses various cellular phones with internal and external antenna configurations in which the antennas are positioned at the bottom of the phone to reduce radiation intensity experienced by a user, i.e., by moving the antenna farther away from the user's brain. Further, in some embodiments the housing of the phone forms an obtuse angle so that the bottom portion of the housing angles away from the user's face.

US 2004/108959 relates to an antenna apparatus with an antennal section comprising an antenna sheet disposed underneath the keypad assembly.

Despite such antenna configurations which allow for reduced radiation exposure, further advancements in antenna configurations, particularly internal antennas, now allow for further reductions in overall device size while still providing relatively low SAR values.

When designing these mobile wireless communications devices using improved antenna designs, however, it is also desirable to use subassemblies that are low in cost and consolidate several parts. Any subassemblies that are placed together should preferably be self-aligning and self-connecting. Some prior art devices have reduced cost by using a separate, main circuit board or radio board with circuitry operative as a radio transceiver, and a separate antenna that could be located on the housing of the mobile wireless communications device or internally, such as at the lower portion of a housing, and separate from any keyboard circuit board or other major circuit boards. Some wireless communications devices have used flex circuits as part of a main circuit board to remove some of the "hard" tooling.

### Summary of the Invention

In view of the foregoing background, it is therefore an object of the present invention to provide a mobile wireless communications device that includes an antenna design that can be incorporated as a subassembly with at least a keyboard circuit board to reduce complexity.

It is yet another object of the present invention to provide a mobile wireless communications device that incorporates a reduced number of subassembly components that can be fitted together in an efficient manner.

These and other objects, features and advantages, in accordance with the present invention, are attained as set out in the independent claims. Some optional features are set out in the claims dependent thereto. There is provided by a mobile wireless communications device, which includes a housing having an upper portion and a lower portion. A main circuit board is carried by the housing and has circuitry thereon. A keyboard circuit board is carried by the lower portion of the housing and has a keyboard section and keyboard circuitry thereon connected to circuitry on the main circuit board. An antenna section is configured as an antenna and positioned at the lower portion in the housing and has a pattern of conductive traces forming an antenna circuit and connected to the circuitry on the main circuit board.

The keyboard circuit board comprises a flex circuit. The keyboard section is substantially planar configured and the main circuit board has a lower portion. The antenna section straddles both sides of the lower portion of the main circuit board. The circuitry on the main circuit board is preferably disposed on one side, although this is not required. An audio output transducer is carried by the upper portion of the housing and connected to the circuitry on the main circuit board. A keyboard support engages the main circuit board and the keyboard circuit board and supports the keyboard section and antenna section. Contact arms are positioned on the antenna section and engage the keyboard support to aid in securing together the keyboard circuit board and keyboard support. A compression connector preferably connects the keyboard circuitry to circuitry on the main circuit board. Pins align together the keyboard circuit board and main circuit board. Contacts are positioned on the antenna section and interconnect the antenna circuit to circuitry on the main circuit board. These contacts can comprise spring contacts.

The keyboard support is carried by the housing within the lower portion and has a substantially planar keyboard support section and antenna support section. The main circuit board is carried by the housing and has circuitry thereon and has a lower portion secured to the antenna support section of the keyboard support. The keyboard circuit board is supported by the keyboard support and has a keyboard section and keyboard circuitry thereon connected to circuitry on the main circuit board and engaging and supported by the keyboard support section. An antenna section is configured as an antenna and has a pattern of conductive traces forming an antenna circuit and connected to circuitry on the main circuit board. The antenna section is supported by the antenna frame.

A method aspect of the invention is also disclosed.

### Brief Description of the Drawings

Other objects, features and advantages of the present invention will become apparent from the detailed description of the invention which follows, when considered in light of the accompanying drawings in which:

FIG. 1 is a schematic block diagram of an example of a mobile wireless communications device in accordance with the present invention and illustrating certain internal components thereof.

FIG. 2 is a front elevational view of the mobile wireless communications device of FIG. 1.

FIG. 3 is an exploded isometric view of the keyboard circuit board, keyboard support, and main circuit board that would be assembled together in an order looking from the lower left to the upper right respectively.

FIG. 4 is an isometric view showing the interconnection among the keyboard support, main circuit board and keyboard circuit board that would all be positioned within a housing of the mobile wireless communications device shown in FIGS. 1 and 2.

FIG. 5 is an exploded isometric view of the underside of the keyboard support and keyboard circuit board and associated parts.

FIG. 6 is an isometric view of the keyboard support and keyboard circuit board and associated parts and showing the interconnection among the boards and associated parts.

FIG. 7 is a sectional view showing the interconnection among the main circuit board, keyboard support, and keyboard circuit board.

FIG. 8 is an enlarged plan view of the keyboard circuit board.

FIG. 9 is another sectional view taken along line 9-9 of FIG. 8 and showing the relative relationship and size of the keyboard support, main circuit board and keyboard circuit board, as one non-limiting example.

FIG. 10 is a schematic block diagram of an exemplary mobile wireless communications device for use with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

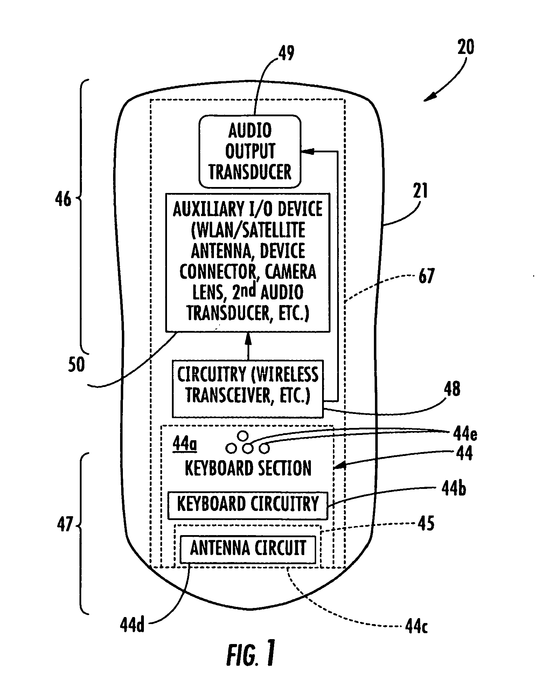

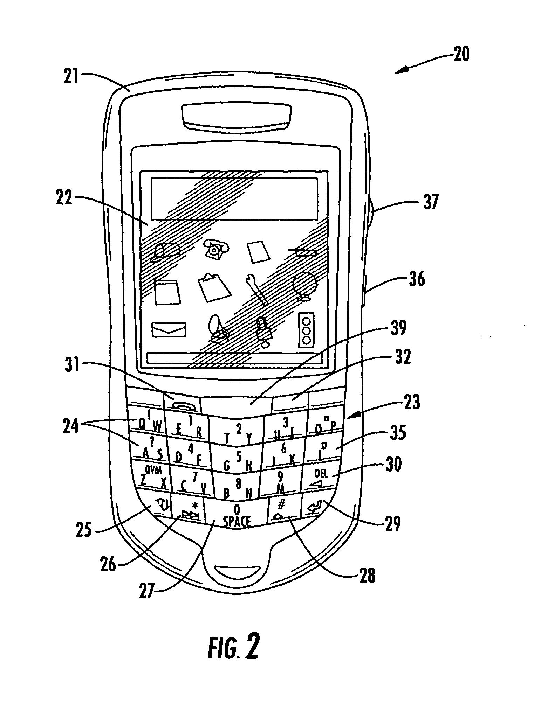

Referring initially to FIGS. 1 and 2, a mobile wireless communications device, such as a mobile cellular device **20,** in accordance with the present invention is first described. The cellular device **20** illustratively includes a housing **21** having an upper portion **46** and a lower portion **47,** and a main dielectric substrate **67,** such as a printed circuit board (PCB) substrate, for example, carried by the housing. The term circuit board **67** as used hereinafter can refer to any dielectric substrate, PCB, ceramic or other structure for carrying signal circuits within a mobile wireless communications device. The illustrated housing **21** is a static housing, for example, as opposed to a flip or sliding housing which are used in many cellular telephones. However, these and other housing configurations may also be used.

Circuitry **48** is carried by the circuit board **67,** such as a microprocessor, memory, one or more wireless transceivers (e.g., cellular, WLAN, etc.), audio and power circuitry, etc., as will be appreciated by those skilled in the art, and as will be discussed further below. A battery (not shown) is also preferably carried by the housing **21** for supplying power to the circuitry **48.**

Furthermore, an audio output transducer **49** (e.g., a speaker) is carried by an upper portion **46** of the housing **21** and connected to the circuitry **48.** One or more user input interface devices, such as a keypad **23** (FIG. 2), is also preferably carried by the housing **21** and connected to the circuitry **48** in a manner to be explained below. Other examples of user input interface devices include a scroll wheel **37** and a back button **36.** Of course, it will be appreciated that other user input interface devices (e.g., a stylus or touch screen interface) may be used in other embodiments.

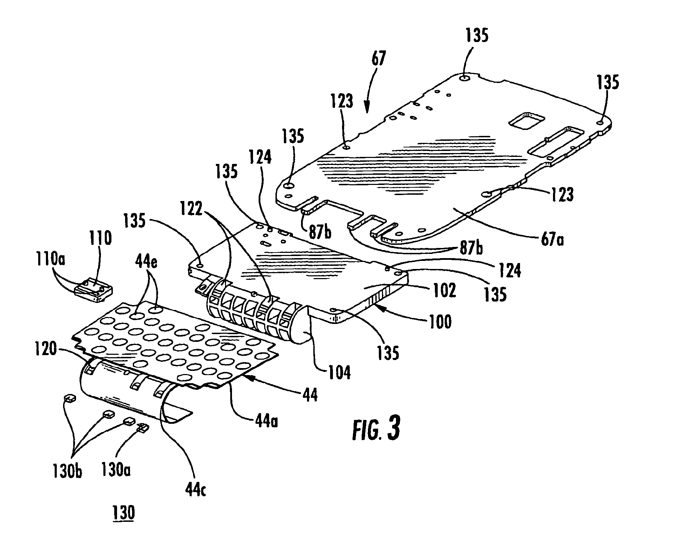

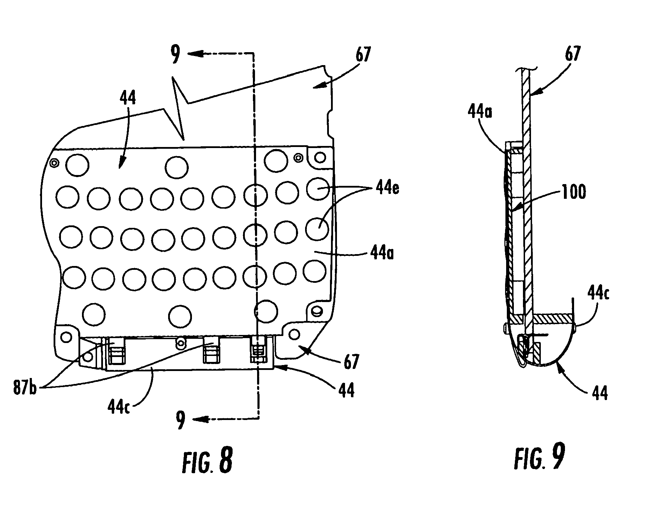

As illustrated in FIG. 1, a separate keyboard circuit board **44** is carried by the lower portion **47** of the housing and has a keyboard section **44a** and keyboard circuitry **44b** thereon connected to circuitry **48** on the main circuit board **67.** An antenna section **44c** is configured as an antenna **45** and positioned at the lower portion **47** in the housing as part of the keyboard circuit board **44** and has a pattern of conductive traces forming an antenna circuit **44d** that physically forms the antenna and connected to the circuitry **48** on the main circuit board **67,** as will be explained in greater detail below with reference to FIGS. 3-9. The antenna **45** is formed on the antenna section **44c.** Appropriate integrated domes **44e** operatively engage keypad buttons and are formed on the keyboard section **44a.**

As indicated, the cellular device **20** further illustratively includes the antenna **45** as part of the keyboard circuit board **44** carried within the lower portion **47** of the housing **21** and comprising a pattern of conductive traces on the antenna section to form the antenna circuit and antenna. By placing the antenna **45** adjacent the lower portion **47** of the housing **21,** this advantageously increases the distance between the antenna and the user's head when the phone is in use to aid in complying with applicable SAR requirements.

More particularly, a user will typically hold the upper portion of the housing **21** very close to his head so that the audio output transducer **49** is directly next to his ear. Yet, the lower portion **47** of the housing **21** where an audio input transducer (i.e., microphone) is located need not be placed directly next to a user's mouth, and is typically held away from the user's mouth. That is, holding the audio input transducer close to the user's mouth may not only be uncomfortable for the user, but it may also distort the user's voice in some circumstances. In addition, the placement of the antenna **45** adjacent the lower portion **47** of the housing **21** also advantageously spaces the antenna farther away from the user's brain.

Another important benefit of placing the antenna **45** adjacent the lower portion **47** of the housing **21** is that this may allow for less impact on antenna performance due to blockage by a user's hand. That is, users typically hold cellular phones toward the middle to upper portion of the phone housing, and are therefore more likely to put their hands over such an antenna than they are an antenna mounted adjacent the lower portion **47** of the housing **21.** Accordingly, more reliable performance may be achieved from placing the antenna **45** adjacent the lower portion **47** of the housing **21.**

Still another benefit of this configuration is that it provides more room for one or more auxiliary input/output (I/O) devices **50** to be carried at the upper portion **46** of the housing. Furthermore, by separating the antenna **45** from the auxiliary I/O device(s) **50,** this may allow for reduced interference therebetween.

Some examples of auxiliary I/O devices **50** include a WLAN (e.g., Bluetooth, IEEE 802.11) antenna for providing WLAN communication capabilities, and/or a satellite positioning system (e.g., GPS, Galileo, etc.) antenna for providing position location capabilities, as will be appreciated by those skilled in the art. Other examples of auxiliary I/O devices **50** include a second audio output transducer (e.g., a speaker for speaker phone operation), and a camera lens for providing digital camera capabilities, an electrical device connector (e.g., USB, headphone, secure digital (SD) or memory card, etc.).

It should be noted that the term "input/output" as used herein for the auxiliary I/O device(s) **50** means that such devices may have input and/or output capabilities, and they need not provide both in all embodiments. That is, devices such as camera lenses may only receive an optical input, for example, while a headphone jack may only provide an audio output.

The device **20** further illustratively includes a display **22** carried by the housing **21** and connected to the circuitry **48.** A back button **36** and scroll wheel **37** can also be connected to the circuitry **48** for allowing a user to navigate menus, text, etc., as will be appreciated by those skilled in the art. The scroll wheel **37** may also be referred to as a "thumb wheel" or a "track wheel" in some instances. The keypad **23** illustratively includes a plurality of multi-symbol keys **24** each having indicia of a plurality of respective symbols thereon. The keypad **23** also illustratively includes an alternate function key **25,** a next key **26,** a space key **27,** a shift key **28,** a return (or enter) key **29,** and a backspace/delete key **30.**

The next key **26** is also used to enter a "*" symbol upon first pressing or actuating the alternate function key **25.** Similarly, the space key **27,** shift key **28** and backspace key **30** are used to enter a "0" and "#", respectively, upon first actuating the alternate function key **25.** The keypad **23** further illustratively includes a send key **31,** an end key **32,** and a convenience (i.e., menu) key **39** for use in placing cellular telephone calls, as will be appreciated by those skilled in the art.

Moreover, the symbols on each key **24** are arranged in top and bottom rows. The symbols in the bottom rows are entered when a user presses a key **24** without first pressing the alternate function key **25,** while the top row symbols are entered by first pressing the alternate function key. As seen in FIG. 2, the multi-symbol keys **24** are arranged in the first three rows on the keypad **23** below the send and end keys **31, 32.** Furthermore, the letter symbols on each of the keys **24** are arranged to define a QWERTY layout. That is, the letters on the keypad **23** are presented in a three-row format, with the letters of each row being in the same order and relative position as in a standard QWERTY keypad.

Each row of keys (including the fourth row of function keys **25-29)** are arranged in five columns. The multi-symbol keys **24** in the second, third, and fourth columns of the first, second, and third rows have numeric indicia thereon (i.e., 1 through 9) accessible by first actuating the alternate function key **25.** Coupled with the next, space, and shift keys **26, 27, 28,** which respectively enter a "*", "0", and "#" upon first actuating the alternate function key **25,** as noted above, this set of keys defines a standard telephone keypad layout, as would be found on a traditional touch-tone telephone, as will be appreciated by those skilled in the art.

Accordingly, the mobile cellular device **20** may advantageously be used not only as a traditional cellular phone, but it may also be conveniently used for sending and/or receiving data over a cellular or other network, such as Internet and email data, for example. Of course, other keypad configurations may also be used in other embodiments. Multi-tap or predictive entry modes may be used for typing e-mails, etc. as will be appreciated by those skilled in the art.

The antenna **45** is preferably formed as a multi-frequency band antenna, which provides enhanced transmission and reception characteristics over multiple operating frequencies. More particularly, the antenna **45** is designed to provide high gain, desired impedance matching, and meet applicable SAR requirements over a relatively wide bandwidth and multiple cellular frequency bands. By way of example, the antenna **45** preferably operates over five bands, namely a 850 MHz Global System for Mobile Communications (GSM) band, a 900 MHz GSM band, a DCS band, a PCS band, and a WCDMA band (i.e., up to about 2100 MHz), although it may be used for other bands/frequencies as well.

To conserve space, the antenna **45** may advantageously be implemented in three dimensions although it may be implemented in two-dimensional or planar embodiments as well.

The antenna section **44c** forms somewhat of a semicircle shape or C configuration, as best shown in FIG. 3. Although the configuration is shown as the preferred semicircular or C configuration, other configurations can be used. To permit the formation of the keyboard circuit board **44** into the desired configuration, which includes an antenna **45,** the keyboard circuit board **44** is formed as a flex circuit board, also termed a flex circuit or flex board, which is an alternative to conventional printed wiring boards and other wiring. A flex circuit fits only one way for fewer wiring errors and ease of assembly. A flex circuit includes all the advantages of a printed circuit board, including repeatability, reliability, and high density while allowing three-dimensional configurations as shown in FIGS. 3-9. The flex circuit can be formed from supplies originating from many different companies, including a flex circuit by Minco of Minneapolis, Minnesota. These could include single-layer, double-layer, multi-layer, rigid flex, and multi-layer with plated and no plated through holes as non-limiting examples. The construction could include a copper clad and polyimide substrate with an adhesive, polyimide cover and an access hole. Other holes could be copper plated. A two-shot molding method could be used. This method allows selective plating and three-dimensional circuitry to be placed on the surface of complex parts.

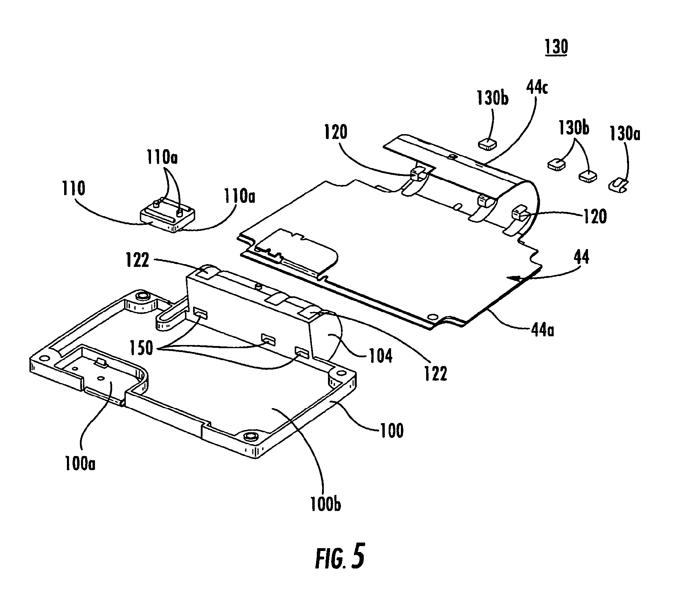

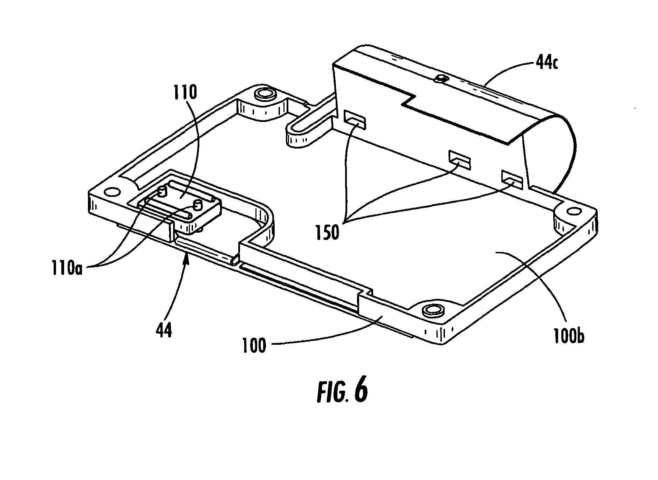

FIG. 3 is an exploded isometric view of the main circuit board **67,** the keyboard support **100,** which would be carried by the housing **21** within the lower portion **47.** The keyboard support **100** has a substantially planar keyboard section **102** and antenna support section **104.** The keyboard circuit board **44** is supported by the keyboard support **100** and, as noted before, includes a keyboard section **44a** and keyboard circuitry **44b** thereon, such as the illustrated integrated domes **44e.** The keyboard circuitry **44b** connects to circuitry **48** on the main circuit board **67** using a compression connector **110** that is supported by the underside of the keyboard support **100** as shown in FIGS. 5 and 6. It has connecting posts **110a** that could connect to the main circuit board **67** and allow interconnection of circuitry **48** on the main circuit board to keyboard circuitry **44b.** As shown in FIG. 6, the compression connector **110** is fitted within a receiving slot **100a** on the underside **100b** of the keyboard support **100.**

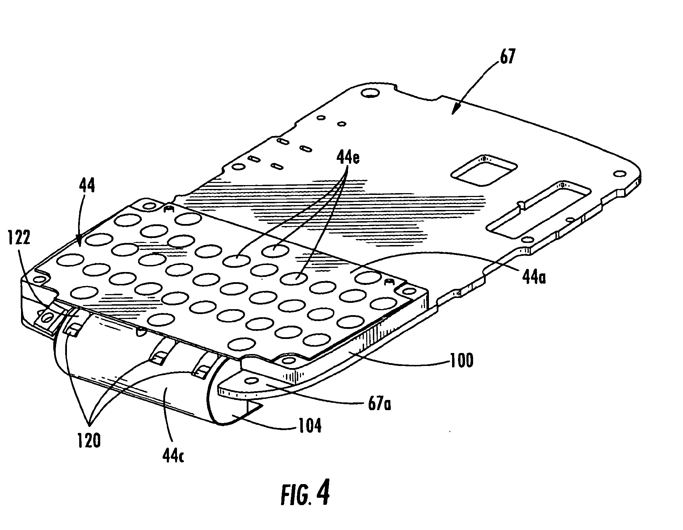

FIG. 4 shows the keyboard support **100,** main circuit board **67** and keyboard circuit board **44** connected together. As illustrated, the main circuit board **67** has a lower portion **67a** and the antenna section **44c** of the keyboard circuit board **44** and the antenna support section **104** straddles both sides of the lower portion of the main circuit board, although this is not required. This design is beneficial because prior art designs typically used a main circuit board that was positioned on only one side of an internal antenna. The structure shown in FIG. 4 allows greater flexibility in antenna design and allows the use of larger patterns and new antenna geometries because it offers the ability to place the antenna elements much farther apart than some previous designs. The antenna configuration can also allow beam shaping.

The circuitry **48** on the main circuit board can also be disposed on one side or both sides. One side can be preferred because this facilitates assembly and preserves a single-sided radio board construction. It is thus self-aligning and self-correcting, and the keyboard circuit board **44** can be snapped into place with the keyboard support **100** and the main circuit board **67.**

Contact arms **120** formed similar to springs as extensions or cuts are preferably formed on the antenna section **44c** and engage the keyboard support **100** to aid in securing together the keyboard circuit board **44** and keyboard support **100.** These contact arms **120** are formed similar to springs as shown in FIG. 5 and engage receiving slots **122** in the antenna support section of the keyboard support **100** to aid in securing together the keyboard circuit board **44** and keyboard support **100.**

FIG. 3 shows various support alignment holes **123** in the main circuit board and locating posts **124** on the keyboard support **100** to align the main circuit board and keyboard support together. Conductive contacts **130** are positioned on the antenna section **44c** and interconnect conductive traces forming the antenna circuit to circuitry **67** on the main circuit board. In one aspect of the invention, the conductive contacts **130** comprise a spring contact or finger that could be formed as a mechanical spring **130a** or conductive elastomeric pad **130b,** such as shown in FIGS. 3 and 5. It is evident that the single flex circuit forming the keyboard circuit board **44** contains both the antenna geometry and the electrical network necessary for the keyboard. There is a selective metallization and circuitry to form the antenna pattern. In one aspect of the present invention, the keyboard support **100** can be formed from plastic or other similar, but lightweight rigid material. The keyboard support **100** and main circuit board **67** each include guide and/or mounting holes **135** at each corner that receive fasteners or other guide pins to align or secure the assembled structure such as shown in FIG. 4 within the housing.

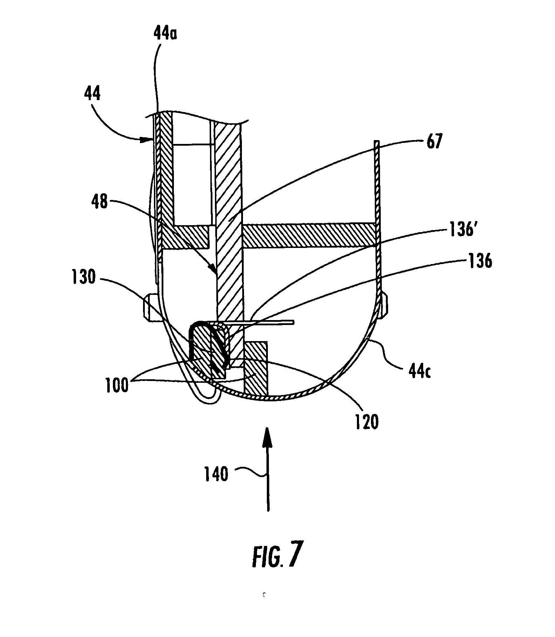

FIGS. 7-9 show the assembly of the keyboard support **100,** main circuit board **67** and keyboard circuit board **49** and the insertion direction of the various components by the arrow at **140.**

During assembly, contact fingers **87b** positioned on the main circuit board engage the conductive contacts **130** through receiving openings **150** formed on the underside **100b** of the antenna support section **104,** as shown in FIG. 6. The contact fingers **87b** include portions of the circuitry **48** and pass through the openings and allow the interconnection of electrical circuitry on the main circuit board with the conductive traces forming an antenna circuit. The fingers **87b** on the main circuit board extend into the openings **150,** and when assembled, engage the conductive arms **120** positioned on the antenna section to allow interconnection of conductive traces for the antenna circuit to circuitry on the main circuit board. The spring finger or elastomeric pad **130** is also shown in detail in FIG. 7 to ensure connection of the antenna circuit to the circuitry on the main circuit board. A flex tail **136** is shown in an undeflected **136'** and deflected position **136.**

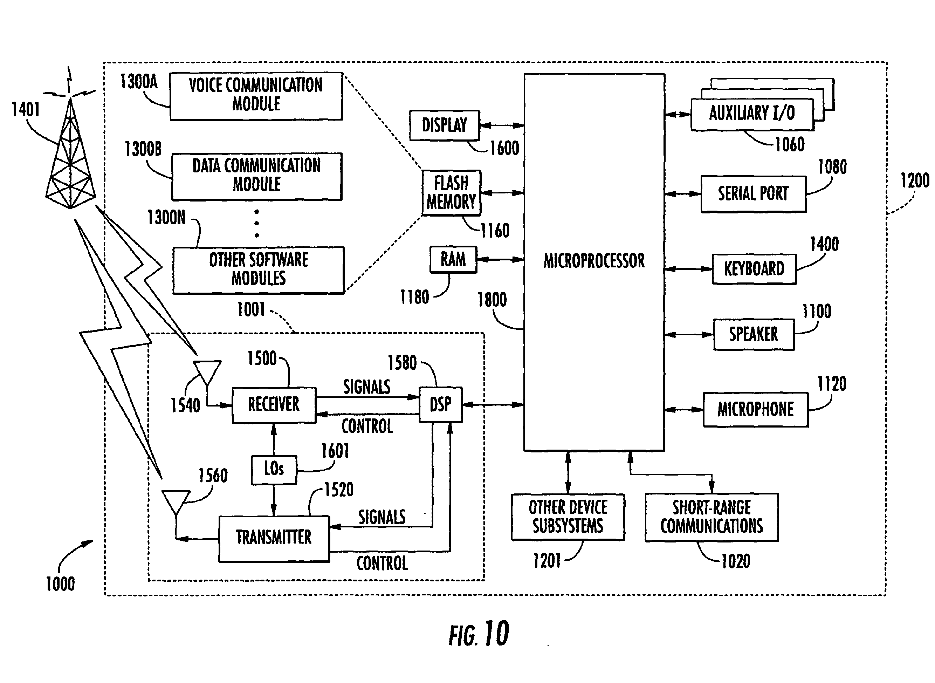

Another example of a hand-held mobile wireless communications device **1000** that may be used in accordance the present invention is further described in the example below with reference to FIG. 10. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 10. These include a communications subsystem **1001;** a short-range communications subsystem **1020;** the keypad **1400** and the display **1600,** along with other input/output devices **1060, 1080, 1100** and **1120;** as well as memory devices **1160,1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000.**

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.
The short-range communications subsystem enables communication between the mobile device **1000** and other proximate systems or devices, which need not necessarily be similar devices. For example, the short-range communications subsystem may include an infrared device and associated circuits and components, or a Bluetooth^{™} communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (20) comprising a housing (21) having an upper portion (46) and a lower portion (47), and a main circuit board (67) carried by the housing (21) and having circuitry (48) thereon, the device comprising:
a keyboard circuit board (44) comprising a flex circuit carried by the lower portion(47) of the housing (21) and having keyboard (44a) and antenna (44c) sections, wherein keyboard circuitry (44b) is positioned on the keyboard section (44a) and connected to circuitry (48) on the main circuit board (67) and an antenna section (44c) as part of the keyboard circuit board configured as an antenna and positioned at the lower portion in the housing and extending from the keyboard section (44a) toward the lower portion of the housing and having a pattern of conductive traces forming an antenna circuit (44d) and connected to said circuitry (48) on the main circuit board (67),
and a keyboard support (100) having a keyboard support section (102) supporting the keyboard section (44a) and an antenna support section (104) supporting said antenna section (44c),
and wherein the antenna section (44c) and the antenna support section (104) straddle both sides of the lower portion of the main circuit board, such that the antenna section (44c) and the antenna support section (104) have a semicircular configuration.

2. A mobile wireless communications device according to Claim 1, wherein said keyboard section (44a) is substantially planar configured.

3. A mobile wireless communications device according to Claim 1, wherein said main circuit board (67) has a lower portion and said antenna section straddles both sides of the lower portion of the main circuit board.

4. A mobile wireless communications device according to Claim 1, wherein said circuitry (48) on said main circuit board (67) is disposed on one side.

5. A mobile wireless communications device according to Claim 1, and further comprising an audio output transducer (49) carried by the upper portion of said housing and connected to said circuitry (48) on said main circuit board.

6. A mobile wireless communications device according to Claim 1, and further comprising a keyboard support (100) that engages the main circuit board (67) and the keyboard circuit board (44) and supports the keyboard section (44a) and antenna section (44c).

7. A mobile wireless communications device according to Claim 6, and further comprising contact arms (120) on the antenna section (44c) that engage said keyboard support to aid in securing together the keyboard circuit board (44) to the keyboard support (100).

8. A mobile wireless communications device according Claim 1, and further comprising a compression connector (130) that connects keyboard circuitry to circuitry on the main circuit board.

9. A mobile wireless communications device according to Claim 1, and further comprising pins (124) that align together the keyboard circuit board and the main circuit board.

10. A mobile wireless communications device according to Claim 1, and further comprising conductive contacts (120) positioned on the antenna section that interconnect the antenna circuit to circuitry on the main circuit board.

11. A mobile wireless communications device according to Claim 10, wherein said conductive contacts comprise spring contacts.

12. A mobile wireless communications device according to Claim 1, and further comprising a keyboard frame (100) carried by the housing within the lower portion and having a substantially planar keyboard support section (102) and antenna support section (104).

13. A mobile wireless communications device according to Claim 12, wherein said main circuit board includes a lower portion (67a) secured to the antenna support section (104) of the keyboard frame.

14. A mobile wireless communications device according to Claim 12, wherein said keyboard circuit board (44) is supported by the keyboard support section (102).

15. A method for making a mobile wireless communications device (20),
having a housing (21) with an upper portion (46) and a lower portion (47); comprising:
connecting together a main circuit board (67) having circuitry(48) thereon and a keyboard circuit board (44) comprising a flex circuit, the keyboard circuit board having keyboard (44a) and antenna (44c) sections, wherein keyboard circuitry (44b) is on the keyboard section and connects to circuitry on the main circuit board and an antenna section (44c) as part of the keyboard circuit board configured as an antenna and extending from the keyboard section toward a lowest portion of the housing and having a pattern of conductive traces forming an antenna circuit (44d) and connected to said circuitry on the main circuit board and positioning the main circuit board and connected keyboard circuit board within the housing such that the keyboard circuit board is positioned at the lower portion of the housing, and providing a keyboard support (100) having a keyboard support section (102) supporting the keyboard section (44a) and an antenna support section (104) supporting said antenna section (44c) wherein
the antenna section (44c) and the antenna support section (104) straddle both sides of the lower portion of the main circuit board, such that the antenna section (44c) and the antenna support section (104) have a semicircular configuration.

16. A method according to Claim 15, which further comprises forming the keyboard circuit board (44) as a flex circuit board.

17. A method according to Claim 15, which further comprises connecting the main circuit board (67) and keyboard circuit board (44) such that the antenna section (44c) straddles the main circuit board.

18. A method according to Claim 16, which further comprises connecting a keyboard support (100) to the main support board (67) for supporting the keyboard circuit board (44).

## Patentansprüche

1. Mobile drahtlose Kommunikationsvorrichtung (20), die aufweist ein Gehäuse (21) mit einem oberen Teil (46) und einem unteren Teil (47) und eine Hauptleiterplatte (67), die durch das Gehäuse (21) getragen wird und Schaltungen (48) darauf hat, wobei die Vorrichtung aufweist:
eine Tastatur-Leiterplatte (44), die eine Flex-Schaltung aufweist, die von dem unteren Teil (47) des Gehäuses (21) getragen wird, und Tastatur- (44a) und Antennenabschnitte (44c) aufweist, wobei Tastaturschaltungen (44b) auf dem Tastaturabschnitt (44a) positioniert sind und mit Schaltungen (48) auf der Hauptleiterplatte (67) und einem Antennenabschnitt (44c) verbunden sind als Teil der Tastatur-Leiterplatte, konfiguriert als eine Antenne und positioniert an dem unteren Teil in dem Gehäuse und sich erstreckend von dem Tastaturabschnitt (44a) in Richtung des unteren Teils des Gehäuses und aufweisend ein Muster von leitenden Bahnen, die eine Antenne-Schaltung (44d) bilden und mit den Schaltungen (48) auf der Hauptleiterplatte (67) verbunden sind,
und eine Tastatur-Unterstützung (100) mit einem Tastatur-Unterstützungsabschnitt (102), der den Tastaturabschnitt (44a) stützt, und einem Antennen-Unterstützungsabschnitt (104), der den Antennenabschnitt (44c) stützt,
und wobei der Antennenabschnitt (44c) und der Antennen-Unterstützungsabschnitt (104) auf beiden Seiten des unteren Teils der Hauptleiterplatte liegen, so dass der Antennenabschnitt (44c) und der Antennen-Unterstützungsabschnitt (104) eine halbkreisförmige Konfiguration haben.

2. Mobile drahtlose Kommunikationsvorrichtung gemäß Anspruch 1, wobei der Tastaturabschnitt (44a) im Wesentlichen planar konfiguriert ist.

3. Mobile drahtlose Kommunikationsvorrichtung gemäß Anspruch 1, wobei die Hauptleiterplatte (67) einen unteren Teil hat und der Antennenabschnitt an beiden Seiten des unteren Teils der Hauptleiterplatte liegt.

4. Mobile drahtlose Kommunikationsvorrichtung gemäß Anspruch 1, wobei die Schaltungen (48) auf der Hauptleiterplatte (67) auf einer Seite angeordnet sind.

5. Mobile drahtlose Kommunikationsvorrichtung gemäß Anspruch 1 und weiter aufweisend einen Audio-Ausgabe-Transducer (49), der durch den oberen Teil des Gehäuses getragen wird und mit den Schaltungen (48) auf der Hauptleiterplatte verbunden ist.

6. Mobile drahtlose Kommunikationsvorrichtung gemäß Anspruch 1 und weiter aufweisend eine Tastatur-Unterstützung (100), welche mit der Hauptleiterplatte (67) und der Tastatur-Leiterplatte (44) in Verbindung steht und den Tastaturabschnitt (44a) und den Antennenabschnitt (44c) trägt.

7. Mobile drahtlose Kommunikationsvorrichtung gemäß Anspruch 6 und weiter aufweisend Kontaktarme (120) auf dem Antennenabschnitt (44c), die mit dem Tastatur-Träger in Verbindung stehen, um gemeinsam zu der Befestigung der Tastatur-Leiterplatte (44) und des Tastatur-Trägers (100) beizutragen.

8. Mobile drahtlose Kommunikationsvorrichtung gemäß Anspruch 1 und weiter aufweisend einen Komprimierungs-Verbinder (130), der Tastaturschaltungen mit Schaltungen auf der Hauptleiterplatte verbindet.

9. Mobile drahtlose Kommunikationsvorrichtung gemäß Anspruch 1 und weiter aufweisend Stifte (124), welche die Tastatur-Leiterplatte und die Hauptleiterplatte zueinander ausrichten.

10. Mobile drahtlose Kommunikationsvorrichtung gemäß Anspruch 1 und weiter aufweisend leitende Kontakte (120), die auf dem Antennenabschnitt positioniert sind, der die Antennenschaltung mit Schaltungen auf der Hauptleiterplatte verbindet.

11. Mobile drahtlose Kommunikationsvorrichtung gemäß Anspruch 10, wobei die leitenden Kontakte Feder-Kontakte aufweisen.

12. Mobile drahtlose Kommunikationsvorrichtung gemäß Anspruch 1 und weiter aufweisend einen Tastatur-Rahmen (100), der durch das Gehäuse in dem unteren Teil getragen wird und einen im Wesentlichen planaren Tastatur-Unterstützungsabschnitt (102) und einen Antennen-Unterstützungsabschnitt (104) hat.

13. Mobile drahtlose Kommunikationsvorrichtung gemäß Anspruch 12, wobei die Hauptleiterplatte einen unteren Teil (67a) umfasst, der an dem Antennen-Unterstützungsabschnitt (104) des Tastatur-Rahmens befestigt ist.

14. Mobile drahtlose Kommunikationsvorrichtung gemäß Anspruch 12, wobei die Tastatur-Leiterplatte (44) durch den Tastatur-Unterstützungsabschnitt (102) gestützt wird.

15. Verfahren zur Herstellung einer mobilen drahtlosen Kommunikationsvorrichtung (20), die ein Gehäuse (21) mit einem oberen Teil (46) und einem unteren Teil (47) hat; wobei das Verfahren aufweist:
Miteinander verbinden einer Hauptleiterplatte (67), die Schaltungen (48) darauf hat, und einer Tastatur-Leiterplatte (44), die eine Flex-Schaltung aufweist, wobei die Tastatur-Leiterplatte (44) Tastatur- (44a) und Antennenabschnitte (44c) aufweist, wobei Tastaturschaltungen (44b) auf dem Tastaturabschnitt sind und mit Schaltungen auf der Hauptleiterplatte und einem Antennenabschnitt (44c) verbunden sind als Teil der Tastatur-Leiterplatte, konfiguriert als eine Antenne und sich erstreckend von dem Tastaturabschnitt in Richtung eines untersten Teils des Gehäuses und aufweisend ein Muster von leitenden Bahnen, die eine Antenne-Schaltung (44d) bilden und mit den Schaltungen auf der Hauptleiterplatte verbunden sind, und Positionieren der Hauptleiterplatte und der verbundenen Tastatur-Leiterplatte in dem Gehäuse derart, dass die Tastatur-Leiterplatte an dem unteren Teil des Gehäuses positioniert ist, und Vorsehen einer Tastatur-Unterstützung (100) mit einem Tastatur-Unterstützungsabschnitt (102), der den Tastaturabschnitt (44a) stützt, und einem Antennen-Unterstützungsabschnitt (104), der den Antennenabschnitt (44c) stützt, wobei
der Antennenabschnitt (44c) und der Antennen-Unterstützungsabschnitt (104) auf beiden Seiten des unteren Teils der Hauptleiterplatte liegen, so dass der Antennenabschnitt (44c) und der Antennen-Unterstützungsabschnitt (104) eine halbkreisförmige Konfiguration haben.

16. Verfahren gemäß Anspruch 15, das weiter ein Bilden der Tastatur-Leiterplatte (44) als eine Flex-Leiterplatte aufweist.

17. Verfahren gemäß Anspruch 15, das weiter aufweist ein Verbinden der Hauptleiterplatte (67) und der Tastatur-Leiterplatte (44) derart, dass der Antennenabschnitt (44c) beiderseits der Hauptleiterplatte liegt.

18. Verfahren gemäß Anspruch 16, das weiter aufweist ein Verbinden einer Tastatur-Unterstützung (100) mit der Haupt-Unterstützungsplatte (67) zur Unterstützung der Tastatur-Leiterplatte (44).

## Revendications

1. Dispositif mobile (20) de communications sans fil comportant un boîtier (21) ayant une partie supérieure (46) et une partie inférieure (47), et une plaquette à circuit principal (67) portée par le boîtier (21) et portant des circuits (48), le dispositif comportant :
une plaquette (44) à circuit de clavier comprenant un circuit souple porté par la partie inférieure (47) du boîtier (21) et ayant des sections de clavier (44a) et d'antenne (44c), dans lequel des circuits (44b) de clavier sont positionnés sur la section de clavier (44a) et connectés à des circuits (48) sur la plaquette (67) à circuit principal, et une section d'antenne (44c) en tant que partie de la plaquette à circuit de clavier configurée en antenne et positionnée à la partie inférieure dans le boîtier et s'étendant depuis la section de clavier (44a) vers la partie inférieure du boîtier, et ayant un motif de pistes conductrices formant un circuit d'antenne (44d) et connecté auxdits circuits (48) sur la plaquette à circuit principal (67),
et un support de clavier (100) ayant une section (102) de support de clavier supportant la section de clavier (44a) et une section (104) de support d'antenne supportant ladite section d'antenne (44c),
et dans lequel la section d'antenne (44c) et la section de support d'antenne (104) chevauchent les deux côtés de la partie inférieure de la plaquette à circuit principal, de manière que la section d'antenne (44c) et la section (104) de support d'antenne aient une configuration semi-circulaire.

2. Dispositif mobile de communications sans fil selon la revendication 1, dans lequel ladite section de clavier (44a) est de configuration sensiblement plane.

3. Dispositif mobile de communications sans fil selon la revendication 1, dans lequel ladite plaquette à circuit principal (67) comporte une partie inférieure et ladite section d'antenne chevauche les deux côtés de la partie inférieure de la plaquette à circuit principal.

4. Dispositif mobile de communications sans fil selon la revendication 1, dans lequel lesdits circuits (48) sur ladite plaquette à circuit principal (67) sont disposés sur un côté.

5. Dispositif mobile de communications sans fil selon la revendication 1, et comportant en outre un transducteur (49) de sortie audio porté par la partie supérieure dudit boîtier et connecté auxdits circuits (48) sur la plaquette à circuit principal.

6. Dispositif mobile de communications sans fil selon la revendication 1, et comportant en outre un support (100) de clavier qui engage la plaquette (67) à circuit principal et la plaquette (44) à circuit de clavier et supporte la section de clavier (44a) et la section d'antenne (44c).

7. Dispositif mobile de communications sans fil selon la revendication 6, et comportant en outre des lames de contact (120) sur la section d'antenne (44c) qui engagent ledit support de clavier pour aider à fixer ensemble la plaquette (44) à circuit de clavier au support (100) de clavier.

8. Dispositif mobile de communications sans fil selon la revendication 1, et comportant en outre un connecteur (130) à compression qui connecte des circuits du clavier à des circuits sur la plaquette à circuit principal.

9. Dispositif mobile de communications sans fil selon la revendication 1, et comportant en outre des ergots (124) qui alignent entre elles la plaquette à circuit de clavier et la plaquette à circuit principal.

10. Dispositif mobile de communications sans fil selon la revendication 1, et comportant en outre des contacts conducteurs (120) positionnés sur la section d'antenne, qui interconnectent le circuit d'antenne à des circuits situés sur la plaquette à circuit principal.

11. Dispositif mobile de communications sans fil selon la revendication 10, dans lequel lesdits contacts conducteurs comprennent des contacts à ressort.

12. Dispositif mobile de communications sans fil selon la revendication 1, et comportant en outre un cadre (100) de clavier porté par le boîtier à l'intérieur de la partie inférieure et ayant une section (102) sensiblement plane de support de clavier et une section (104) de support d'antenne.

13. Dispositif mobile de communications sans fil selon la revendication 12, dans lequel ladite plaquette à circuit principal comprend une partie inférieure (67a) fixée à la section (104) de support d'antenne du cadre de clavier.

14. Dispositif mobile de communications sans fil selon la revendication 12, dans lequel ladite plaquette (44) à circuit de clavier est supportée par la section (102) de support de clavier.

15. Procédé pour réaliser un dispositif mobile (20) de communications sans fil, ayant un boîtier (21) comportant une partie supérieure (46) et une partie inférieure (47) ;
comprenant :
la connexion entre elles d'une plaquette (67) à circuit principal, portant des circuits (48), et d'une plaquette (44) à circuit de clavier comprenant un circuit souple, la plaquette à circuit de clavier ayant des sections de clavier (44a) et d'antenne (44c), dans lequel des circuits (44b) de clavier se trouvent sur la section de clavier et sont connectés à des circuits situés sur la plaquette à circuit principal, et une section d'antenne (44c) en tant que partie de la plaquette à circuit de clavier configurée en antenne et s'étendant depuis la section de clavier vers la partie la plus basse du boîtier et ayant un motif de pistes conductrices formant un circuit d'antenne (44d) et connectées auxdits circuits sur la plaquette à circuit principal et positionnant la plaquette à circuit principal et la plaquette à circuit de clavier connectée à l'intérieur du boîtier de façon que la plaquette à circuit de clavier soit positionnée à la partie inférieure du boîtier, et procurant un support (100) de clavier ayant une section (102) de support de clavier supportant la section de clavier (44a) et une section (104) de support d'antenne supportant ladite section d'antenne (44c), dans lequel
la section d'antenne (44c) et la section (104) de support d'antenne chevauchent les deux côtés de la partie inférieure de la plaquette à circuit principal, de manière que la section d'antenne (44c) et la section (104) de support d'antenne aient une configuration semi-circulaire.

16. Procédé selon la revendication 15, qui comprend en outre la formation de la plaquette (44) à circuit de clavier sous la forme d'une plaquette à circuit souple.

17. Procédé selon la revendication 15, qui comprend en outre la connexion de la plaquette (67) à circuit principal et de la plaquette (44) à circuit de clavier de façon que la section d'antenne (44c) chevauche la plaquette à circuit principal.

18. Procédé selon la revendication 16, qui comprend en outre la connexion d'un support (100) de clavier à la plaquette (67) de support principal pour supporter la plaquette (44) à circuit de clavier.
